# EUROPÄISCHE PATENTANMELDUNG

(11) **EP 1 964 636 A2**
(43) Veröffentlichungstag der Anmeldung: **03.09.2008**
(21) Anmeldenummer: 08001982.1
(22) Anmeldetag: 02.02.2008
(51) Int. Cl.: B23G 1/34, B23G 5/06

(54) **Rotierend antreibbarer Schneidkopf**

(30) Priorität: 28.02.2007 DE 102007011336
(71) Anmelder: Fette GmbH, 21493 Schwarzenbek (DE)
(72) Erfinder: Adam, Detlef, 21483 Lütau (DE); Focken, Andreas, 21493 Schwarzenbek (DE); Wöhl, Roland, 21502 Worth (DE)
(74) Vertreter: Hauck Patent- und Rechtsanwälte

(57) **Zusammenfassung**

Rotierend antreibbarer Schneidkopf mit mindestens einem Schneideinsatz, der ein Schneidprofil aufweist zum radialen Eingriff in ein Werkstück, dessen eine Achse in der Rotationsachse des Schneidkopfes liegt, wobei Schneidkopf und Werkstück axial und in Rotationsrichtung relativ zueinander bewegt werden, wobei der Schneideinsatz an einem Haltebauteil des Schneidkopfes lösbar befestigbar ist, wobei ferner das Haltebauteil und damit der Schneideinsatz zwischen einer Arbeits- und einer Freigabestellung radial bewegbar ist und mit Sperrmitteln zum Positionieren des Schneideinsatzes in der Arbeitsstellung und Verstellmitteln zum Verstellen des Schneideinsatzes von der Arbeits- in die Freigabestellung und umgekehrt, wobei der Schneideinsatz (10,12,14,10a) eine Achse aufweist, die parallel im Abstand zur Rotationsachse verläuft, der Schneideinsatz bei einer Drehung um seine Achse in mindestens zwei im Winkelabstand liegende Drehpositionen am Haltebauteil (34,44) befestigbar ist und in jeder Drehposition ein Schneidprofil (20) am Schneideinsatz in Bearbeitungsstellung ist.

## Beschreibung

Die Erfindung bezieht sich auf einen rotierend antreibbaren Schneidkopf nach dem Patentanspruch 1.

Es ist bekannt, zum Schneiden von Außengewinden Schneidköpfe zu verwenden, die mit Schneideinsätzen versehen sind. Es ist auch bekannt, derartige Schneidköpfe selbstöffnend auszuführen. Das Werkstück wird in der Achse des Schneidkopfes relativ zum Schneidkopf bewegt und zwischen Schneidkopf und Werkstück findet eine Relativdrehung statt. Nach Beendigung des Gewindeschneidvorgangs wird der Schneidkopf geöffnet, d.h. die Schneideinsätze werden mit Hilfe eines sinnreichen Mechanismus radial um eine Strecke nach außen bewegt, damit das Werkstück schnell und unproblematisch aus dem Schneidkopf entfernt werden kann.

Die Schneideinsätze sind so ausgestaltet, daß nach einem Verschleiß des Schneidprofils ein Nachschleifen erfolgt. Ein Nachschleifen hat jedoch für den Anwender etliche Nachteile. So ist das Nachschleifen der Gewindeschneideinsätze nur außerhalb des Schneidkopfes möglich. Das Nachschleifen erfordert seitens des Anwenders eine umfangreiche Ausrüstung. Nach dem Nachschleifen müssen die Schneideinsätze im Gewindeschneidkopf neu justiert werden. Eine mögliche Hartstoffbeschichtung des Schneideinsatzes ist nach dem Nachschleifen nicht mehr vorhanden. Gegebenenfalls muß eine erneute Beschichtung vorgenommen werden.

Es ist ferner bekannt, Schneidköpfe mit Schneideinsätzen zum Schälen von Werkstücken auszurüsten, zum Beispiel auch mit Wendeschneidplatten.

Der Erfindung liegt die Aufgabe zugrunde, einen rotierend antreibbaren Schneidkopf zu schaffen, bei dem das Nachschleifen entfällt sowie auch das erneute Justieren nach einem Schneidenwechsel.

Diese Aufgabe wird durch die Merkmale des Patentanspruchs 1 gelöst.

Bei der Erfindung weist der Schneideinsatz eine Achse auf, die parallel im Abstand zur Rotationsachse verläuft. Der Schneideinsatz ist bei einer Drehung um seine Achse in mindestens zwei im Winkelabstand liegenden Drehpositionen am Haltebauteil befestigbar und jeder Drehposition ist ein Schneidprofil am Schneideinsatz zugeordnet.

Bei dem erfindungsgemäßen Schneidkopf ist ein Nachschleifen des Schneideinsatzes nicht erforderlich. Bei Verschleiß eines Schleifprofils wird der Schneideinsatz gelöst und in einer um einen Winkel verdrehten Position erneut am Haltebauteil befestigt. In dieser neuen Drehposition weist der Schneideinsatz ebenfalls ein Schneidprofil auf, das nunmehr zur Bearbeitung herangezogen werden kann. Es versteht sich, daß an einem Körper des Schneideinsatzes eine Vielzahl von Schneidprofilen untergebracht sein kann, wenn zum Beispiel der Schneideinsatzkörper sternförmig angeordnete Arme aufweist, wobei jedem Arm ein Schneidprofil zugeordnet ist.

Nach dem Verschleiß des letzten Schneidprofils ist der komplette Schneideinsatzkörper durch einen anderen zu ersetzen.

Eine Neujustierung des Schneidprofils bei einer um einen Winkel verdreht angeordneten Position des Schneideinsatzes kann ebenfalls entfallen, wenn dafür gesorgt ist, daß die Drehpositionen mittels geeigneter Anschläge oder dergleichen gesichert sind.

Es versteht sich, daß wie im Stand der Technik auch mehrere in Umfangsrichtung beabstandete Schneideinsätze vorgesehen werden können, beispielsweise drei.

Der erfindungsgemäße Schneidkopf wird insbesondere für das Schneiden eines Außengewindes mit Vorteil einsetzbar sein. Eine andere Einsatzmöglichkeit ist das Schälen von Werkstücken.

Das Schneidprofil kann nach einer Ausgestaltung der Erfindung einteilig mit dem Schneideinsatzkörper ausgebildet sein. Alternativ kann das Schneidprofil an einem getrennten Profilabschnitt ausgebildet sein, der lösbar am Schneideinsatzkörper befestigbar ist. Beispielsweise kann der abgetrennte Profilabschnitt eine Schneidplatte sein, die in geeigneter Weise am Schneideinsatzkörper befestigt ist. Die Schneidplatte kann ihrerseits als Wechselplatte ausgebildet sein, um die Gesamtstandzeit des Schneideinsatzes zu verlängern.

Es wurde bereits angedeutet, daß am Haltebauteil Verriegelungsmittel vorzusehen sind, um den Schneideinsatz in der jeweiligen Drehposition zu verriegeln. Nach einer Ausgestaltung der Erfindung können die Verriegelungsmittel einen Stift aufweisen, der annähernd passend in den Zwischenraum zwischen benachbarten Armen eingreift. Falls der Schneideinsatz nicht mit sternförmig angeordneten Armen versehen ist, können im Schneideinsatz beispielsweise Bohrungen vorgesehen werden, die mit einem Stift am Haltebauteil zusammenwirken. Alternativ können die Bohrungen auch im Haltebauteil und der Stift im Schneideinsatz vorgesehen werden.

Nach einer Ausgestaltung der Erfindung ist das Haltebauteil mit einem ersten den Schneideinsatz aufweisenden Halteabschnitt versehen und ein zweiter Halteabschnitt nimmt den ersten Halteabschnitt auf. Der erste Halteabschnitt ist in versetzten radialen Positionen am zweiten Halteabschnitt festlegbar. Diese Maßnahme trägt der Forderung Rechnung, den Schneideinsatz und Schneidkopf für unterschiedliche Durchmesser des Werkstücks einzusetzen.

Es wurde bereits erläutert, daß es bekannt ist, bei Schneidköpfen den Schneideinsatz in eine inaktive Position radial zu verstellen, um Schneidkopf und Werkstück außer Eingriff zu bringen. In diesem Zusammenhang sieht eine Ausgestaltung der Erfindung vor, daß das Haltebauteil entlang einer radialen Führungsbahn an einem Ringbauteil des Schneidkopfes geführt ist, im Ringbauteil eine Welle eines Exzenters drehbar gelagert ist und der Exzenter mit dem Haltebauteil zusammenwirkt, um bei einer Drehung diesen radial entlang der Führungsbahn zu bewegen. Die Exzenterwelle ist von einem Antrieb antreibbar. Ein solcher Antrieb kann zum Beispiel ein Federantrieb sein, der nach seiner Auslösung die Exzenterwelle um einen gewissen Betrag verstellt und dadurch das Haltebauteil radial verstellt. Dadurch kommt das Schneidprofil mit dem Werkstück außer Eingriff. Es versteht sich, daß der Federantrieb erneut gespannt werden muß. Dies kann entweder von Hand erfolgen oder auf motorischem Wege. Es versteht sich außerdem, daß der Schneideinsatz in der Arbeitsstellung verriegelt ist.

Die letztere Ausführungsform lehnt sich an die Mechanik eines an sich bekannten Axialgewinderollkopfs an, wie er etwa in DE 44 30 184 A1 beschrieben ist. Die Walzen oder Rollen sitzen auf einer Exzenterwelle, die von einem Zahnradgetriebe verdrehbar ist, wenn eine Spiralfeder ausgelöst wird. Diese Anordnung ist über eine Klauenkupplung mit einem Antriebsschaft kuppelbar. Die Kupplungshälften werden aufeinander zu vorgespannt, und zwar ebenfalls mit Hilfe der Spiralfeder. Durch Verdrehung des Lagerbauteils gegenüber dem Antriebsschaft erfolgt ein Verrasten der Klauenkupplung. Kommt hingegen ein Werkstück gegen eine Auslösestange, werden die Kupplungshälften außer Eingriff gebracht und die Spiralfeder kann die Exzenterwellen antreiben und damit die Walzrollen radial auseinanderfahren, damit das Werkstück problemlos zwischen diesen herausgefahren werden kann. Der erfindungsgemäße Schneidkopf kann ähnlich ausgebildet sein, wie der oben bereits beschriebene Gewinderollkopf, wobei es jedoch einer vorderen Lagerplatte für die Exzenterwellen nicht bedarf. Im übrigen kann die Mechanik genauso ausgeführt sein, wie in DE 44 30 184 A1 beschrieben. Es sind jedoch auch andere Axialrollköpfe bekannt geworden, die auf einem vergleichbaren Prinzip beruhen.

Ein Ausführungsbeispiel der Erfindung wird nachfolgend anhand von Zeichnungen näher erläutert.
- Fig. 1: zeigt die Frontansicht eines Schneidkopfs nach der Erfindung.
- Fig. 2: zeigt einen Schnitt durch den Schneidkopf nach Fig. 1 entlang der Linie 2-2.
- Fig. 3: zeigt perspektivisch in Seiten- und Stirnansicht eine erste Ausführungsform eines Schneideinsatzes nach der Erfindung.
- Fig. 4: zeigt perspektivisch, in Seiten- und Stirnansicht eine zweite Ausführungsform eines Schneideinsatzes nach der Erfindung.

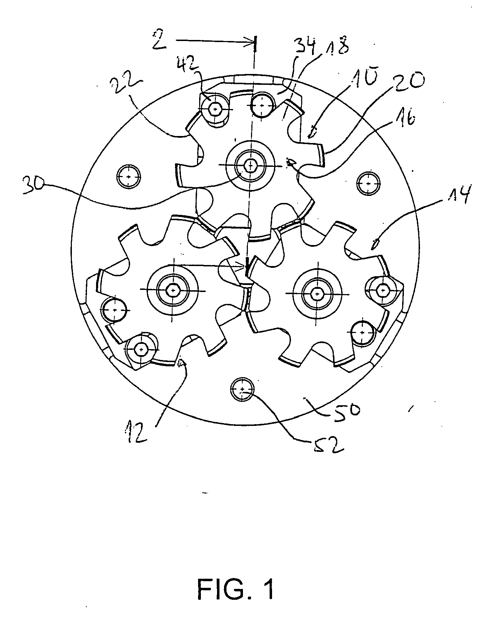

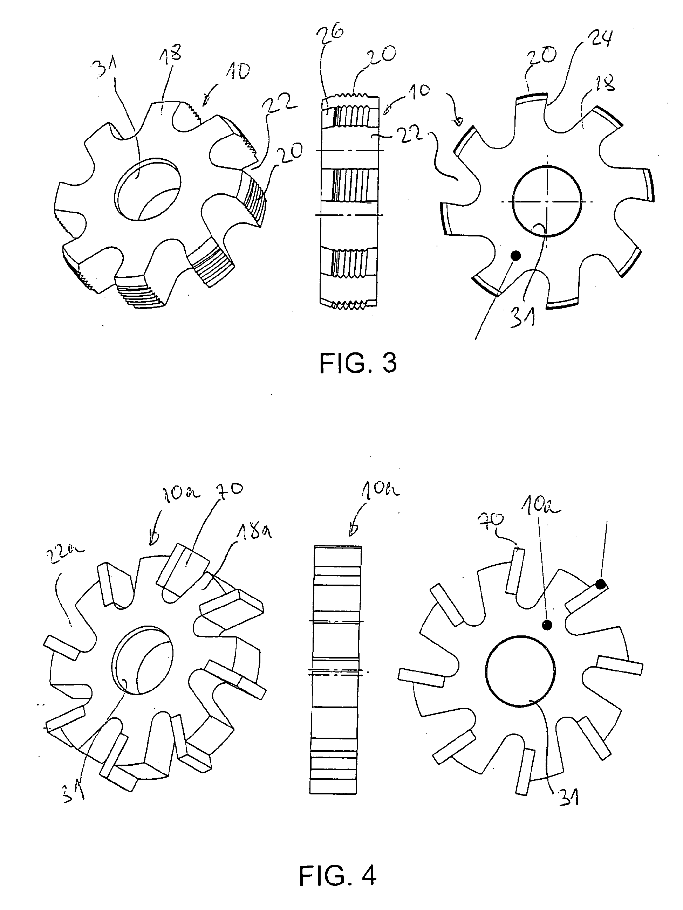

In Fig. 1 sind drei Schneideinsätze 10, 12 und 14 gezeigt. Ein Schneideinsatzkörper 16 ist mit acht Armen 18 versehen, die annähernd sternförmig angeordnet sind und an ihrem äußeren Ende ein Gewindeschneidprofil 20 aufweisen. Damit gleichen die Schneideinsätze 10 bis 14 dem in Fig. 3 dargestellten Schneideinsatz. Zwischen den Armen 18 befinden sich Lücken 22. Bei der Bearbeitung mit einem Schneidprofil 20 ist die in Fig. 3 linke Flanke 24 die Spanfläche, wenn eine Relativdrehung zu einem Werkstück (nicht gezeigt) stattfindet. Die Ausbildung des Gewindeschneidprofils 20 ist in axialer Richtung derart, daß zunächst ein Einlauf 26 für das Werkstück vorgesehen ist, bevor die volle Gewindetiefe erzeugt wird. Das Werkstück wird daher bei einem Schneideinsatz nach Fig. 3 von links zugeführt. Es versteht sich, daß bei der Formung eines Außengewindes jeweils nur das Schneidprofil 20 eines Arms 18 eines Schneideinsatzes 10 bis 14 zum Einsatz kommt, wie dies aus Fig. 1 zu erkennen ist.

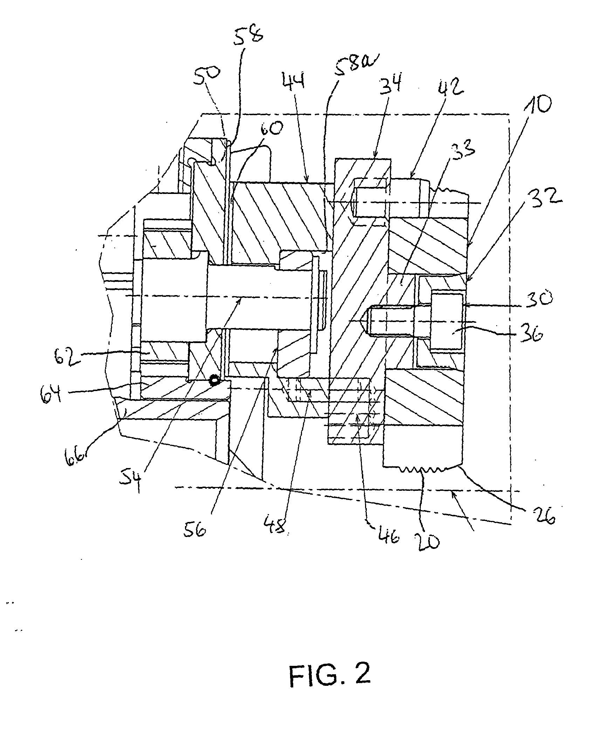

Wie aus den Fign. 1 und 2 hervorgeht, sind die drei in gleichem Umfangsabstand angeordnete Gewindeschneideinsätze 10 bis 14 mit Hilfe einer Schraube 30 über eine Klemmpratze 32 in axialer Richtung an einem ersten Halteabschnitt 34 befestigt. Der Kopf 36 der Schraube ist daher in der Klemmpratze 32 versenkt und steht mithin nicht nach außen vor. Eine Bohrung 31 der Schneideinsätze 10 bis 14 nimmt Klemmpratze 32 auf, wobei auf der gegenüberliegenden Seite der Halteabschnitt 34 einen ringförmigen Bund 33 besitzt, der annähernd passend in die Bohrung 31 eingreift.

In den Halteabschnitt 34 ist frontseitig ein Verriegelungsstift 42 eingeschraubt, der passend in die Lücke 22 benachbarter Arme eingreift, um die jeweilige Drehposition des Schneideinsatzes 10 festzulegen. Ist ein Gewindeschneidprofil 20 abgenutzt, wird der Schneideinsatz 20 durch Lösen der Schraube 30 abgenommen und in einer weiteren Drehposition erneut befestigt, wobei die Drehung einer Teilung der Gewindeschneidsätze 10 bis 14 entspricht. In dieser Position wird der Gewindeschneideinsatz erneut befestigt, damit der Schneidkopf mit anderen Schneidprofilen 20 zum Einsatz gebracht werden kann. Die Betriebsunterbrechung, die erforderlich ist, um ein anderes Gewindeschneidprofil 20 zum Einsatz zu bringen, ist, wie ersichtlich, relativ kurz. Ein Nachjustieren ist nicht erforderlich, da eine präzise Ausrichtung mit dem Festziehen der Schraube 30 und mit Hilfe des Stiftes 42 erfolgt.

In Fig. 2 ist zu erkennen, daß der erste Halteabschnitt 34 an einem zweiten Halteabschnitt 44 befestigt ist. Die Befestigung erfolgt mit Hilfe von Schrauben, die hier nicht dargestellt sind. Die Schrauben greifen in nicht gezeigte Langlöcher des Halteabschnitts 34, um diesen in relativen Radialpositionen mit dem ersten Halteabschnitt 34 zu befestigen. Dieser weist nämlich radial beabstandete Bohrungen 46 auf, mit welchen ein Stift 48 am zweiten Halteabschnitt 44 zusammenwirkt. Auf diese Weise kann eine grobe Radialeinstellung des Schneideinsatzes 10 vorgenommen werden.

In einer Ringscheibe 50, die mittels Schrauben 52 am im übrigen nicht dargestellten Schneidkopf befestigt ist, sind Wellen drehbar gelagert, von denen eine bei 54 gezeigt ist. Die Wellen tragen am rechten Ende einen Exzenter, hier Exzenter 56, der unverdrehbar auf der Welle 54 sitzt und annähernd passend in eine Ausnehmung 58 des zweiten Halteabschnitts 44 eingreift. Eine Verdrehung der Welle 54 führt daher zu einer Radialverstellung des Halteabschnitts 44 und damit des Halteabschnitts 34 und damit wiederum des Schneideinsatzes 10. Die Ringscheibe 50 weist auf der rechten Seite eine Schwalbenschwanzführung 58 auf, mit der ein Schwalbenschwanzabschnitt 60 auf der zugewandten Seite des Halteabschnitts 44 zusammenwirkt, wenn die beschriebene Radialbewegung erfolgt. Statt einer Schwalbenschwanzführung kann auch eine andere Linearführung vorgesehen werden.

Auf der anderen Seite der Ringscheibe 40 ist ein Ritzel 62 auf der Welle 54 drehfest angeordnet, das mit einem zentralen Zahnrad 64 zusammenwirkt. Das Zahnrad sitzt auf einem Schaft 66. Wird der Schaft 66 verdreht, erfolgt damit auch eine Verdrehung der Exzenterwellen.

Der zuletzt beschriebene Mechanismus dient dazu, die Schneideinsätze 10 bis 14, die jeweils gleich verstellbar sind wie dies in Verbindung mit Fig. 2 für den Schneideinsatz 10 beschrieben ist, mit dem bearbeiteten Werkstück außer Eingriff zu bringen bzw. eine radiale Feineinstellung vorzunehmen. Der hier angedeutete Mechanismus entspricht im übrigen dem, wie er in DE 44 30 184 A1 offenbart ist. Der Schaft 66 wird von einem Federantrieb in Drehung versetzt, sobald z.B. eine nicht gezeigte Spiralfeder gelöst wird. Dieses Lösen erfolgt zum Beispiel dadurch, daß eine Klauenkupplung außer Eingriff kommt. Dieses Außereingriffbringen erfolgt dadurch, daß ein Werkstück, das mit einem Außengewinde versehen wird, eine Betätigungsstange verschiebt, welche die Klauenkupplung trennt. Dadurch kann die Spiralfeder den Schaft 66 in Drehung versetzen und die Exzenterwellen 54 drehen, damit die Schneideinsätze 10 bis 14 sich radial auseinanderbewegen.

Mit Hilfe einer ebenfalls in DE 44 30 184 A1 beschriebenen Maßnahme kann die Feder erneut gespannt und das Einrücken der Klauenkupplung bewirkt werden. Dadurch werden die Schneideinsätze 10 bis 14 in die Arbeitsposition zwecks Erstellung eines weiteren Gewindeabschnitts gebracht.

In Fig. 4 ist dargestellt, daß ein Schneideinsatz 10a mit Armen 18a Schneidplatten 70 aufnehmen kann, die mit einem Schneidprofil versehen werden können. Das Schneidprofil ist nicht dargestellt. Es kann statt eines Gewindeschneidprofils auch ein Schälprofil oder dergleichen sein. Die Schneidplatten 70 werden in geeigneter nicht gezeigter Weise an den Armen 10a befestigt. Sie können ihrerseits Wechselplatten sein, d.h. mindestens zwei Schneidprofile aufweisen, wie dies in Verbindung mit anderen Wechselschneidplatten an sich bekannt ist.

## Patentansprüche

1. Rotierend antreibbarer Schneidkopf mit mindestens einem Schneideinsatz, der ein Schneidprofil aufweist zum radialen Eingriff in ein Werkstück, dessen eine Achse in der Rotationsachse des Schneidkopfes liegt, wobei Schneidkopf und Werkstück axial und in Rotationsrichtung relativ zueinander bewegt werden, wobei der Schneideinsatz an einem Haltebauteil des Schneidkopfes lösbar befestigbar ist, wobei ferner das Haltebauteil und damit der Schneideinsatz zwischen einer Arbeits- und einer Freigabestellung radial bewegbar ist und mit Sperrmitteln zum Positionieren des Schneideinsatzes in der Arbeitsstellung und Verstellmitteln zum Verstellen des Schneideinsatzes von der Arbeits- in die Freigabestellung und umgekehrt, **dadurch gekennzeichnet, daß** der Schneideinsatz (10, 12, 14, 10a) eine Achse aufweist, die parallel im Abstand zur Rotationsachse verläuft, der Schneideinsatz (10, 12, 14, 10a) bei einer Drehung um seine Achse in mindestens zwei im Winkelabstand liegende Drehpositionen am Haltebauteil (34, 44) befestigbar ist und in jeder Drehposition ein Schneidprofil (20) am Schneideinsatz (10, 12, 14, 10a) in Bearbeitungsstellung ist.

2. Schneidkopf nach Anspruch 1, **dadurch gekennzeichnet, daß** das Schneidprofil (20) ein Gewindeschneidprofil ist.

3. Schneidkopf nach Anspruch 1, **dadurch gekennzeichnet, daß** das Schneidprofil ein Schälprofil ist.

4. Schneidkopf nach einem der Ansprüche 1 bis 3, **dadurch gekennzeichnet, daß** der Schneideinsatz (10, 12, 14) sternförmig angeordnete Arme (18) aufweist an denen jeweils ein Schneidprofil (20) angeordnet ist.

5. Schneidkopf nach einem der Ansprüche 1 bis 4, **dadurch gekennzeichnet, daß** das Schneidprofil (20) einteilig mit einem Schneideinsatzkörper (16) ausgebildet ist.

6. Schneidkopf nach einem der Ansprüche 1 bis 4, **dadurch gekennzeichnet, daß** das Schneidprofil als getrennter Profilabschnitt (70) ausgebildet ist, der lösbar oder nicht lösbar an einem Schneideinsatzkörper befestigbar ist.

7. Schneidkopf nach einem der Ansprüche 1 bis 6, **dadurch gekennzeichnet, daß** der Schneideinsatz (10, 12, 14) mit Hilfe einer axialen Schraube (30) am Haltebauteil (34, 44) befestigbar ist.

8. Schneidkopf nach einem der Ansprüche 1 bis 7, **dadurch gekennzeichnet, daß** am Haltebauteil Verriegelungsmittel vorgesehen sind, die den Schneideinsatz in der jeweiligen Drehposition verriegeln.

9. Schneidkopf nach Anspruch 4 und 8, **dadurch gekennzeichnet, daß** die Verriegelungsmittel von einem Stift (42) am Haltebauteil gebildet sind, der annähernd passend in den Zwischenraum (22) zwischen benachbarten Armen (18) eingreift.

10. Schneidkopf nach einem der Ansprüche 1 bis 9, **dadurch gekennzeichnet, daß** das Haltebauteil einen den Schneideinsatz (10, 12, 14) aufnehmenden ersten Halteabschnitt (34) und einen den ersten Halteabschnitt (34) aufnehmenden zweiten Halteabschnitt (44) aufweist und der erste Halteabschnitt (34) in verschiedenen radialen Positionen am zweiten Halteabschnitt (44) festlegbar ist.

11. Schneidkopf nach Anspruch 10, **dadurch gekennzeichnet, daß** der zweite Halteabschnitt (44) einen Stift (48) aufweist, der mit in radialer Richtung versetzt angeordneten Bohrungen (46) des ersten Halteabschnitts (34) zusammenwirkt.

12. Schneidkopf nach einem der Ansprüche 1 bis 11, **dadurch gekennzeichnet, daß** das Haltebauteil entlang einer radialen Führungsbahn an einem Ringbauteil (50) des Schneidkopfes geführt ist, in dem Ringbauteil (50) mindestens eine Welle (54) eines Exzenters (56) drehbar gelagert ist, der Exzenter (56) mit dem Haltebauteil zusammenwirkt um diesen bei Drehung radial entlang der Führungsbahn (58) zu bewegen und die Welle (54) über ein Getriebe (64, 62) von einem Antrieb antreibbar ist.

13. Schneidkopf nach Anspruch 12, **dadurch gekennzeichnet, daß** der Antrieb ein Federantrieb ist dergestalt, daß bei seiner Auslösung der Schneideinsatz (10, 12, 14) in die Freigabestellung bewegt wird, wobei die Verstellmittel bei Verstellung des Schneideinsatzes in die Arbeitsposition den Federantrieb vorspannen und die Sperrmittel das Haltebauteil in der Arbeitsstellung verriegeln.

14. Schneidkopf nach Anspruch 12 oder 13, **dadurch gekennzeichnet, daß** die Führungsbahn (58) einen Schwalbenschwanzquerschnitt aufweist, der mit einem Schwalbenschwanzabschnitt (60) des Haltebauteils (44) zusammenwirkt.

15. Schneidkopf nach Anspruch 10 und einem der Ansprüche 12 bis 14, **dadurch gekennzeichnet, daß** der Exzenter (56) annähernd passend in ein Langloch (58a) des zweiten Halteabschnitts (44) eingreift.

16. Schneideinsatz für einen rotierend antreibbaren Schneidkopf, der eine Rotationsachse aufweist, wobei der Schneideinsatz ein Schneidprofil für den radialen Eingriff in ein Werkstück aufweist, **dadurch gekennzeichnet, daß** der Schneideinsatz (10, 12, 14, 10a) eine Achse aufweist, der Schneideinsatz (10, 12, 14, 10a) Mittel aufweist, um eine Drehung um seine Achse in mindestens zwei im Winkelabstand liegenden Drehpositionen am Schneidkopf befestigt zu werden und jeder Drehposition des Schneideinsatzes (10, 12, 14, 10a) ein Schneidprofil zugeordnet ist.

17. Schneideinsatz nach Anspruch 16, **dadurch gekennzeichnet, daß** das Schneidprofil (20) ein Gewindeschneidprofil ist.

18. Schneideinsatz nach Anspruch 16, **dadurch gekennzeichnet, daß** das Schneidprofil ein Schälprofil ist.

19. Schneideinsatz nach einem der Ansprüche 16 bis 18, **dadurch gekennzeichnet, daß** der Schneideinsatz (10, 12, 14) sternförmig angeordnete Arme (18) aufweist an denen jeweils ein Schneidprofil (20) angeordnet ist.

20. Schneideinsatz nach einem der Ansprüche 16 bis 19, **dadurch gekennzeichnet, daß** das Schneidprofil (20) einteilig mit einem Schneideinsatzkörper (16) ausgebildet ist.

21. Schneideinsatz nach einem der Ansprüche 16 bis 19, **dadurch gekennzeichnet, daß** das Schneidprofil als getrennter Profilabschnitt (70) ausgebildet ist, der lösbar oder nicht lösbar an einem Schneidkörper befestigbar ist.
